# EUROPÄISCHE PATENTSCHRIFT

(11) **EP 0 607 360 B1**
(45) Veröffentlichungstag und Bekanntmachung des Hinweises auf die Patenterteilung: **21.06.1995**
(21) Anmeldenummer: 93902210.9
(22) Anmeldetag: 15.01.1993
(51) Int. Cl.: F23R 3/34, F23R 3/10

(54) **BRENNKAMMER-ANORDNUNG EINER GASTURBINE**
GAS-TURBINE COMBUSTION-CHAMBER ASSEMBLY
ENSEMBLE CHAMBRE DE COMBUSTION D'UNE TURBINE A GAZ

(30) Priorität: 24.01.1992 GB 9201542
(43) Veröffentlichungstag der Anmeldung: 27.07.1994
(73) Patentinhaber: BMW ROLLS-ROYCE GmbH, 61402 Oberursel (DE)
(72) Erfinder: CHING TO KWAN, William, D-8060 Dachau (DE)
(74) Vertreter: Bücken, Helmut
(86) Internationale Anmeldenummer: EP9300086
(87) Internationale Veröffentlichungsnummer: WO9315364

(56) Entgegenhaltungen:
- FR-A- 1 130 091
- FR-A- 2 219 310
- FR-A- 2 407 352

## Beschreibung

Die Erfindung betrifft eine Brennkammer-Anordnung einer Gasturbine mit einer Vielzahl von ringförmig und wechselweise angeordneten Pilotbrennern und Hauptbrennern, die in eine ringförmige Brennkammer münden.

Zur Schadstoffreduzierung kann bei Gasturbinen mit einer sogenannten abgestuften Verbrennung gearbeitet werden. Ein Pilotbrenner wird dabei hinsichtlich optimaler Verbrennung im Niedriglastbetrieb ausgelegt, um die Emissionen von unverbrannten Kohlenwasserstoffen sowie Kohlenmonoxid zu minimieren, während der Hauptbrenner hinsichtlich magerer Verbrennung und niedriger Verweilzeit im Hochlastbetrieb ausgelegt wird, um geringe Emissionen von Stickoxiden und Rauch zu erzielen. Bekannt sind drei grundsätzliche Methoden in der sogenannten abgestuften Verbrennung, bekannt als die "Axial-Staging-Method", die "Radial-Staging-Method" und die "Circumferential-Staging-Method". Letztere ist beispielsweise in der EP-A 04 01 529 gezeigt.

Ferner zeigt die FR-A-1 130 091 eine Brennkammeranordnung mit Pilotbrennerrohren sowie dazwishenliegenden Hauptbrennerrohren.

Die vorliegende Erfindung betrifft die "Circumferential-Staging-Method", und hat sich zur Aufgabe gestellt, eine Brennkammer einfacher Bauart bei dennoch optimaler Verbrennung aufzuzeigen. Dabei soll insbesondere der Pilotbrenner im Niederlastbetrieb sowie im Anfahrbetrieb optimiert werden und zusätzlich bei einem Wiederanfahren in großen Höhen eine bessere Zündung gewährleisten. Letzteres ist für Gasturbinen von Flugzeugen von besonderer Bedeutung.

Zur Lösung dieser Aufgabe sind die kennzeichnenden Merkmale des ersten Patentanspruches vorgesehen. Vorteilhafte Aus- und Weiterbildungen beschreiben die Unteransprüche.

Erfindungsgemäß sind die Pilotbrenner als eigenständige Brennkammern ausgebildet, wodurch ein hoher Verbrennungs-Wirkungsgrad erreicht wird, wenn diese im Niederlastbetrieb allein betrieben werden. Entsprechend den Merkmalen des ersten Anspruches besitzen diese Pilotbrenner kegelige Mischrohre mit einer einströmseitig angeordneten Brennstoffdüse und in einer bevorzugten Ausführungsform mit Primärluft-Verwirblern. In jedem Pilotbrenner wird Brennstoff über die Brennstoffdüse eingespritzt und mit der Primärluft vermengt. Die Verbrennung erfolgt zumindest teilweise innerhalb dieses Mischrohres, bevor das Brenngas in die eigentliche ringförmige Brennkammer der Gasturbine gelangt.

Im Hochlastbetrieb arbeiten zusätzlich die Hauptbrenner. Diese Hauptbrenner bestehen im wesentlichen aus Brennstoffdüsen, die direkt in die ringförmige Brennkammer der Brennkammer-Anordnung münden. In einer bevorzugten Ausführungsform besitzt jeder Hauptbrenner zwei nebeneinander angeordnete Brennstoffdüsen. Hierbei bietet es sich an, diese beiden Brennstoffdüsen in radialer Richtung benachbart zwischen den Mischrohren der Pilotbrenner anzuordnen. Im wesentlichen liegen diese beiden Brennstoffdüsen der Brennstoff-Einspritzvorrichtung des Hauptbrenners somit in einer abströmseitigen Ebene der Pilotbrenner-Mischrohre. Dabei werden im Anfahrbetrieb sowie im Niederlastbetrieb die Hauptbrenner nicht betrieben; vielmehr kann nur dann Brennstoff aus den Brennstoffdüsen dieser Hauptbrenner-Einspritzvorrichtung austreten und verbrannt werden, wenn der Brennstoffdruck einen durch ein entsprechendes Ventil vorgegebenen Grenzdruck überschreitet.

Während im Niederlastbetrieb nur die Pilotbrenner arbeiten, findet im Hochlastbetrieb sowohl an den Hauptbrennern als auch an den Pilotbrenner eine Verbrennung statt. Dabei wird der Brennstoff derart auf die vorhandenen Brennstoffdüsen aufgeteilt, daß der maximal mögliche Querschnitt der ringförmigen Gasturbinen-Brennkammer bedeckt wird. In Summe wird das stöchometrische Verhältnis hinsichtlich optimaler Verbrennung im Anfahr- und Niederlastbetrieb sowie hinsichtlich einer mageren Verbrennung und niedriger Verweilzeit im Hochlastbetrieb eingestellt. Erreichbar ist dies durch eine optimierte Zuteilung von Luft und Brennstoff. Weiter optimieren läßt sich das stöchometrische Verhältnis in den beiden Stufen dieser abgestuften Verbrennung, wenn insbesondere für die Hauptbrenner Brennstoffdüsen zum Einsatz kommen, die einen sich seitlich erweiternden Brennstoff-Kegelstrahl erzeugen. Diese Brennstoffstrahlen können mit Luftströmen vermischt werden, die über Löcher in der Außenwand und/oder Innenwand der ringförmigen Gasturbinen-Brennkammer eintreten. Beispielsweise stoßen über die Außenwand eintretende Luftströme mit einem Brennstoffstrahl einer oberen Brennstoffdüse zusammen und vermischen sich mit diesem, während Luftströme, die über die Innenwand eintreten, mit den Brennstoffstrahlen unterer Brennstoffdüsen zusammenwirken. Die Vermischung der Luftströme mit den Brennstoffstrahlen ergibt im Hauptbrenner bei Hochlastbetrieb ein mageres stöchometrisches Gemisch.

In einer bevorzugten Ausführungsform besitzt die ringförmige Brennkammer Innenwände und Außenwände sowie einen ringförmigen Brennerkopf, der zwischen den stromaufseitigen Enden der Innen- und Außenwand liegt. Eine Stirnwand verbindet die Stoßstelle zwischen der ringförmigen Außenwand und dem äußeren Abschnitt des Brennerkopfes mit der Stoßstelle zwischen der ringförmigen Innenwand und dem inneren Abschnitt des Brennerkopfes und bildet dabei eine Trennstelle, die das heiße Gas innerhalb der ringförmigen Brennkammer von der Luft im Brennerkopf trennt. Die Stirnwand ist mit Hitzeschild-Segmenten versehen, die gemeinsam mit der Innenwand und Außenwand die ringförmige Brennkammer begrenzen.

Im Außenbereich des ringförmigen Brennerkopfes sind die Pilotbrenner-Mischrohre vorgesehen, die stromaufseitig eine Eintrittsöffnung besitzen und stromabseitig in die ringförmige Brennkammer münden. In der Eintrittsöffnung jedes Mischrohres können die bereits genannten Primärluft-Verwirbler vorgesehen sein, die Primärluft in die ringförmige Brennkammer einführen. Koaxial zu diesem Primärluft-Verwirbler kann eine Brennstoffeinspritzdüse angeordnet sein, um über die Eintrittsöffnung dieses kegeligen Mischrohres Kraftstoff in die ringförmige Brennkammer einzuführen. Koaxial zu jedem Mischrohr kann stromab der Primärluft-Verwirbler ein Leitkonus vorgesehen sein, der vom Mischrohr beabstandet ist und somit eine ringförmige Kammer bildet, die umfangsseitig Kühlluft-Eintrittsöffnungen aufweist, um so durch verstärkte Konvektion die Hitze vom Mischrohr abzuführen. Der Leitkonus kann sich stromabseitig bis zur ringförmigen Brennkammer erstrecken und an der oben genannten Stirnwand befestigt sein, wobei Kühlluft radial durch einen Spalt zwischen dem Hitzeschild und dem Mischrohr in die ringförmige Brennkammer gelangen kann.

In einer bevorzugten Ausführungsform kann der Sektor in der Stirnwand zwischen zwei Mischrohren zwei in radialer Richtung nebeneinanderliegende Öffnungen aufweisen, die koaxial mit einer Dichtungsanordnung versehen sind, um zwei Brennstoffdüsen einer Hauptbrenner-Einspritzvorrichtung aufzunehmen. Die Mischrohre sind bevorzugt soweit voneinander beabstandet, daß eine Flamme, die in einem dieser Mischrohre gezündet hat, auf die benachbarten Mischrohre überspringen kann, um ein gutes "light round" in der ringförmigen Brennkammer bei Anfahrbetrieb und Niederlastbetrieb zu ermöglichen. Bei diesen Betriebszuständen gibt die zwei Brennstoffdüsen aufweisende Hauptbrenner-Einspritzvorrichtung, die zwischen den stromabseitigen Enden der Mischrohre angeordnet ist, unter Einfluß eines vorgesehenen Steuerventiles nämlich keinen Brennstoff ab.

Im vorderen Bereich können die Außenwand sowie die Innenwand Lufteintrittsöffnungen bzw. Luftmischdüsen aufweisen, um den aus den Mischrohren austretenden Gasen sowie den bei Hochlastbetrieb über die Einspritzvorrichtung zugeführten Brennstoffdämpfen Luft beizumengen. Diese Lufteintrittsöffnungen bzw. Luftmischdüsen können den jeweiligen Anforderungen entsprechend unterschiedlich ausgebildet sein. Intensiv wirkende Luftmischdüsen, die es der zugeführten Luft ermöglichen, die vorliegenden Gas- bzw. Brennstoffdämpfe intensivst zu durchdringen, sind beispielsweise in Reihe mit den Pilotbrenner-Mischrohren angeordnet. Diese intensiv wirkenden Luftmischdüsen erzielen eine starke Recirculation während der Zündphase und minimieren dabei die Rauchemissionen, während Lufteintrittsöffnungen mit demgegenüber geringerer Durchdringung stromab jeder Hauptbrenner-Einspritzvorrichtung vorgesehen sein können, um örtlich ein mageres Gemisch sowie eine niedrige Verweilzeit bei Hochlastbetrieb zu erzielen.

Wenn im Anfahrbetrieb sowie im Niederlastbetrieb über diese Hauptbrenner-Einspritzvorrichtung kein Brennstoff zugeführt wird, so dienen die diesen zugeordneten Lufteintrittsöffnungen lediglich dazu, die aus den Pilotbrenner-Mischrohren austretenden Brenngase zu verdünnen.

In das Innere der Pilotbrenner-Mischrohre wird Brennstoff durch eine Brennstoffdüse eingebracht und vermischt sich mit der verwirbelten Primärluft. Dieses Gebiet, in dem die Verbrennung stattfindet und in dem sich die Flamme stromab in die ringförmige Brennkammer ausbreitet, wird als Pilotstufe bezeichnet. Der Abschnitt unmittelbar stromab der zwei Brennstoffdüsen aufweisenden Hauptbrenner-Einspritzvorrichtung, wo sich bevorzugt dampfförmige Brennstoff-Kegelstrahlen mit zugeführten Luftströmen vermischen und wo ebenfalls deren Verbrennung erfolgt, wird als Hauptstufe bezeichnet. In verschiedenen Betriebspunkten wird unterschiedlich Brennstoff und Luft zugeführt, wobei die Auslegung jeweils entsprechend den Anforderungen im Anfahrbetrieb und Niedriglastbetrieb bzw. im Hochlastbetrieb optimiert werden kann. Insbesondere die dem Hauptbrenner zugeordneten Brennstoffdüsen können dabei einen im wesentlichen elliptischen Brennstoffkegel mit einem großen Öffnungswinkel erzeugen, der dann sowohl von der oberen als auch von der unteren Brennstoffdüse abgegeben wird und mit den Luftströmen, die über die Eintrittsöffnungen in der Innen- und Außenwand eintreten, zusammentrifft. Auf diese Weise kann das stöchometrische Verhältnis sehr mager gehalten werden.

Im folgenden wird ein bevorzugtes Ausführungsbeispiel der Erfindung näher beschrieben. Es zeigt
- Figur 1: einen Querschnitt durch eine Gasturbine mit einer erfindungsgemäß gestalteten Brennkammer-Anordnung,
- Figur 2: einen vergrößerten Schnitt durch das stromaufseitige Ende dieser Brennkammeranordnung gemäß Figur 1 längs eines sogenannten Pilotbrenners,
- Figur 3: einen ähnlichen Schnitt wie Figur 2 durch einen Hauptbrenner,
- Figur 4: eine Teilansicht gemäß den Pfeilen A-A bzw. B-B aus den Figuren 2, 3, die die Brennstoff-Einspritzcharakteristik von Pilotbrennern und Hauptbrennern zeigt.
- Figur 5: stellt exemplarisch einen Ausschnitt aus einer Abwicklung der ringförmigen Brennkammer dar, wobei der Niederlastbetrieb dargestellt ist, während
- Figur 6: diese Abwicklung exemplarisch bei Hochlastbetrieb zeigt.

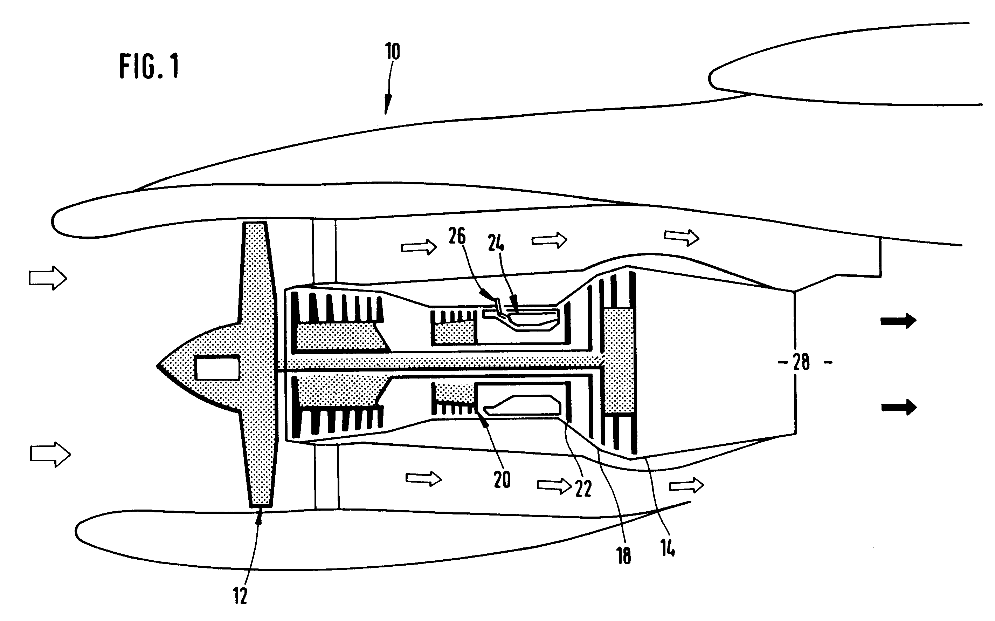

In Figur 1 bezeichnet die Bezugsziffer 10 eine Gasturbine, die ein von einem Turbinenrad 18 angetriebenes Verdichterrad 12 besitzt, sowie einen Hochdruckverdichter 20, der von einer Hochdruckturbine 22 angetrieben wird. Bestandteil dieser Gasturbine 10 ist ferner eine ringförmige Brennkammer-Anordnung 24 mit einer Vielzahl von im wesentlichen gleichweit voneinander beabstandeten, ringförmig angeordneten Brennstoff-Einspritzvorrichtungen 26. Der vom Verdichterrad 12 geförderte Luftstrom wird in der Brennkammer-Anordnung 24 verbrannt und treibt als Abgasstrom die Turbinen 14, 18 und 22 an und wird schließlich durch eine Abgasdüse 28 abgeführt.

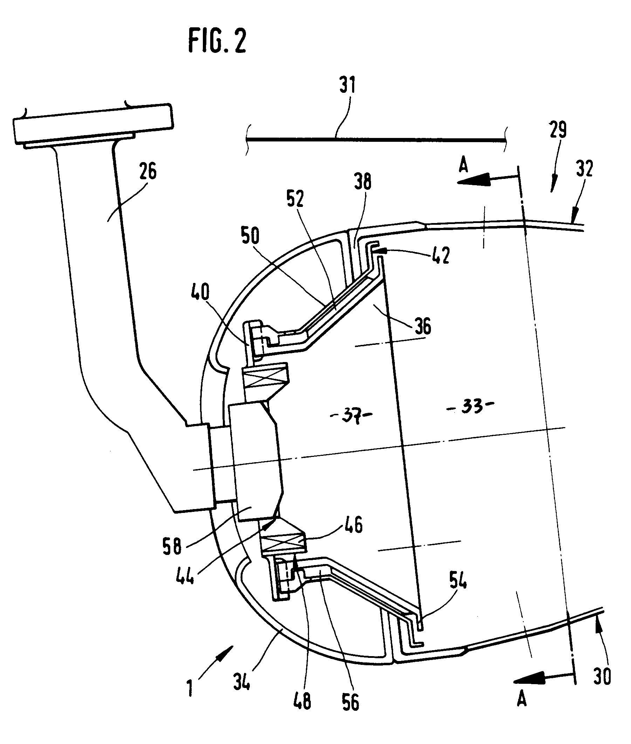

Die Brennkammer-Anordnung 24 ist auf die "Circumferential-Staging-Method" hin ausgelegt und besitzt unter anderem ringförmig angeordnete Pilotbrenner 1, von denen einer detailliert in Figur 2 gezeigt ist. Dabei besitzt die Brennkammer-Anordnung 24 ein ringförmiges Flammrohr 29, das in einem ringförmigen Gehäuse 31 angeordnet ist. Das Flammrohr 29 weist eine Innenwand 30, eine Außenwand 32 sowie einen Brennkopf 34 auf, der durch eine Stirnwand 38 abgetrennt ist. Umfangsmäßig angeordnet sind in diesem Brennerkopf 34 kegelige Mischrohre 36, die die jeweiligen Pilotbrenner 1 bilden und die an ihrem stromaufseitigen Ende 37 eine Öffnung besitzen, während sie mit ihren stromabseitigen Ende in die ringförmige Brennkammer 33 der Gasturbine 10 münden. Eine Dichtungsanordnung 40 in der stromaufseitigen Öffnung 37 besitzt koaxial zueinander verlaufende innere und äußere Wände 44 und 48 und nimmt unter anderem Primärluft-Verwirbler 46 sowie je eine Brennstoff-Einspritzvorrichtung 26 auf. Über die Primärluft-Verwirbler 46 kann Primärluft in das Mischrohr 36 und letztendlich in die Brennkammer 33 gelangen, während die Brennstoff-Einspritzvorrichtungen 26 über die koaxial zur ringförmigen inneren Wand 44 der Dichtungsanordnung 40 sowie koaxial zu den PrimärluftVerwirblern 46 angeordneten Brennstoffdüsen 58 Brennstoff in das Mischrohr 36 durch die Öffnung 37 zuführen.

Koaxial zu jedem kegeligen Mischrohr 36 ist ein Leitkonus 50 angeordnet, der stromab der Dichtungsanordnung 40 beginnt und vom Mischrohr 36 beabstandet ist, um eine Ringkammer 56 für Kühlluft zu bilden und somit die äußere Oberfläche 52 des Mischrohres 36 zu kühlen. Jeder Leitkonus 50 erstreckt sich mit seinem stromabseitigen Ende bis in die ringförmige Brennkammer 33 und stützt sich an der Stirnwand 38 ab, während jedes Mischrohr 36 im Endbereich eine sich in radialer Richtung erstreckende Flanke 54 aufweist. Befestigt sind die Leitkonusse 50 mit ihren stromaufseitigen Enden an den Mischrohren 36.

Bei Betrieb der Pilotbrenner 1 gelangt Brennstoff aus den einzelnen Brennstoffdüsen 58 über die einzelnen Mischrohre 36 letztendlich in die ringförmige Brennkammer 33. Gleichzeitig gelangt Primärluft vom Hochdruckverdichter 20 über die Primärluft-Verwirbler 46 ebenfalls in die Mischrohre 36 und letztendlich in das ringförmige Flammrohr 29. Diese Primärluft wird beim Passieren der Primärluft-Verwirbler 36 verwirbelt, so daß sie sich in optimaler Weise mit dem aus der Brennstoffdüse 58 austretenden Brennstoff vermischen kann, bevor sich dieses Gemisch im Inneren des Mischrohres 36 entzündet und zumindest teilweise verbrannt wird, von wo aus dieses brennende bzw. verbrannte Gemisch schließlich in die ringförmige Brennkammer 33 gelangt.

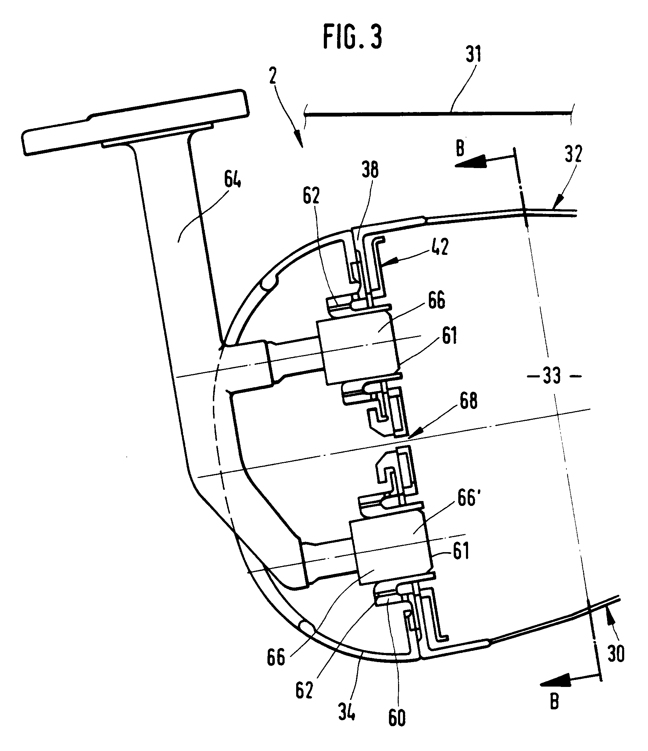

In Figur 3 ist ein Schnitt durch den stromaufseitigen Endbereich der Brennkammer-Anordnung 24 längs eines Hauptbrenners 2 gemäß der "Circumferential-Staging-Method" gezeigt. Dieser Schnitt führt durch einen Sektor des Brennerkopfes 34 zwischen zwei Mischrohren 36 zweier Pilotbrenner 1. Wie ersichtlich sind zwei in radialer Richtung nebeneinander angeordnete Öffnungen in der Stirnwand 38 vorgesehen, in der jeweils eine eine Öffnung 61 aufweisende Durchgangstülle 62 angeordnet ist. Diese Durchgangstüllen 62 nehmen dabei Brennstoffdüsen 66, 66' einer Einspritzvorrichtung 64 auf. Eine Vielzahl derartiger Einspritzvorrichtungen 64 fördern über die Brennstoffdüsen 66, 66' Brennstoff in die ringförmige Brennkammer 33, wenn der vorhandene Brennstoffdruck einen Grenzdruck eines nicht gezeigten Steuerventiles überschreitet, d.h. wenn die einzelnen Hauptbrenner 2 arbeiten sollen.

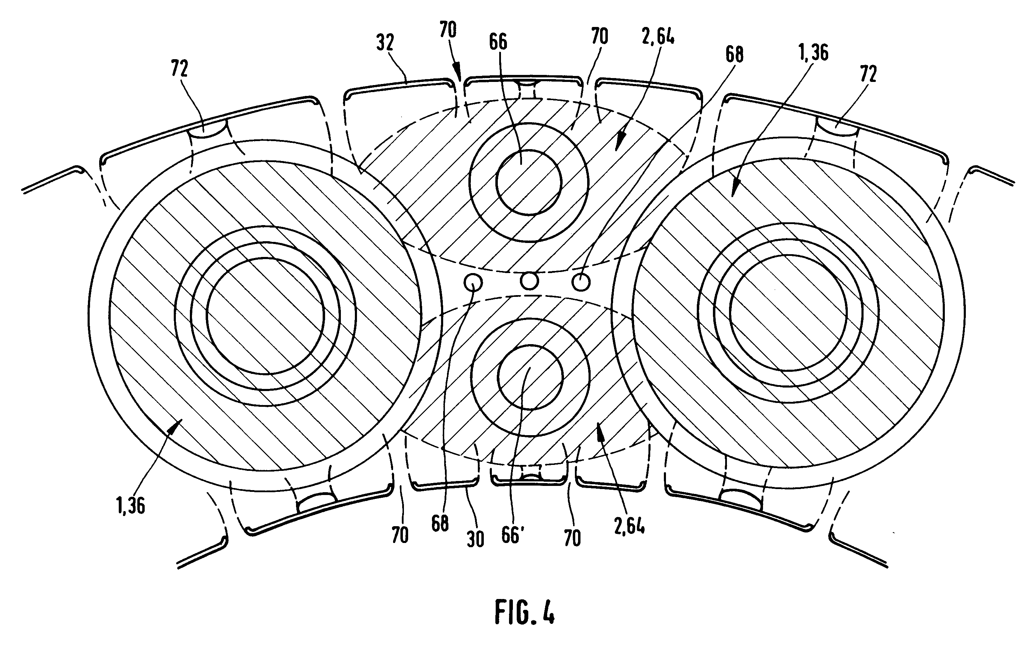

Figur 4 zeigt einen Ausschnitt einer Ansicht auf die einzelnen Brennstoffdüsen, betrachtet aus Richtung der Brennkammer 33. Hier erkennt man den besonderen Vorteil von speziell gestalteten Brennstoffdüsen 66, 66' der Hauptbrenner-Einspritzvorrichtung 64. Gezeigt sind in dieser Figurendarstellung die sich durch kegelförmige Aufweitung ergebenden Brennstoffstrahlen bzw. Brenngemischstrahlen, wobei neben den Pilotbrennern 1 auch die Hauptbrenner 2 arbeiten; in diesem Stadium wird die Brennkammer-Anordnung 24 bzw. die Gasturbine 10 somit im Hochlastbetrieb gefahren. Das brennende bzw. verbrannte Gas aus den Pilotbrennern 1 bzw. den Mischrohren 36 gelangt dabei ebenso wie die Brennstoffstrahlen der Brennstoffdüsen 66, 66' in die ringförmige Brennkammer 33. Die Brennstoffstrahlen sowohl der oberen Düse 66 als auch der unteren Düse 66' des Hauptbrenners 2 erzeugen dabei jeweils einen elliptischen Brennstoffkegel. Diese dampfförmigen Brennstoffkegel werden mit Luftströmen vermengt, die über Lufteintrittsöffnungen 70 sowohl in der Innenwand 30 als auch in der Außenwand 32 in die Brennkammer 33 gelangen, sowie mit weiteren Luftströmen, die über zentral angeordnete Düsen 68 in der Stirnwand 38 zugeführt werden. Ferner erkennt man mit der Bezugsziffer 72 bezeichnete intensiv wirkende Luftmischdüsen, die es der über sie zugeführten Luft ermöglichen, die aus den Pilotbrennern 1 bzw. den Mischrohren 36 austretenden Gas- bzw. Brennstoffdämpfe intensivst zu durchdringen.

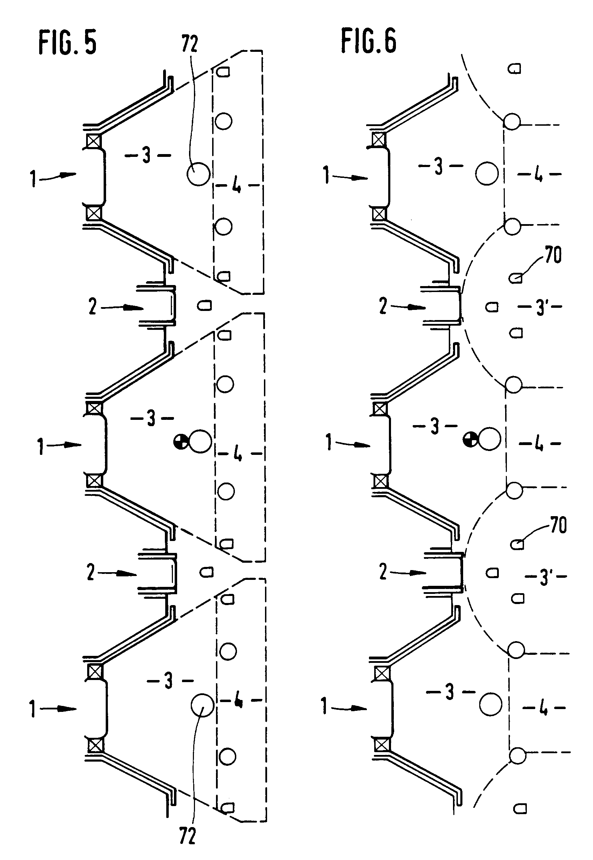

Ein Teilstück einer Abwicklung dieser Brennkammer-Anordnung 24 zeigen die Figuren 5 und 6. In Figur 5 ist der Niederlastbetrieb dargestellt. Dabei gelangt Brennstoff lediglich über die Brennstoff-Einspritzvorrichtungen 26 der einzelnen Pilotbrenner 1 in die Brennkammer 33. Hingegen sind die Hauptbrenner 2 im Niederlastbetrieb gemäß Figur 5 nicht in Betrieb, d.h. über deren Einspritzvorrichtung 64 wird kein Brennstoff zugeführt. Die Flammausbreitung in der gesamten Brennkammer-Anordnung 24, die im wesentlichen aus den Mischrohren 36 sowie der ringförmigen Brennkammer 33 besteht, ist hier als sogenannte Primärzone 3 sowie als Sekundärzone 4 dargestellt. Die Primärzone 3 befindet sich größtenteils innerhalb der Mischrohre 36 sowie im Austrittsbereich der intensiv wirkenden Luftmischdüsen 72, während die Sekundärzone 4 vorrangig durch den Bereich der ringförmigen Brennkammer 33 zwischen den einander gegenüberliegenden Lufteintrittsöffnungen 70 in der Außenwand 32 sowie der Innenwand 30 beschrieben ist.

Figur 6 zeigt eine Figur 5 entsprechende Abwicklung, d.h. exemplarisch die einzelnen Verbrennungszonen, wenn sowohl die Pilotbrenner 1 als auch die Hauptbrenner 2 bei Hochlastbetrieb arbeiten. Brennstoff gelangt dann sowohl über die Brennstoff-Einspritzvorrichtungen 26 als auch über die zwei Brennstoffdüsen aufweisenden Einspritzvorrichtungen 64 in die Brennkammer 33. Die Primärzone 3 der Pilotbrenner 1 bleibt im wesentlichen dieselbe wie im Niederlastbetrieb gemäß Figur 5, während der Bereich um die Lufteintrittsöffnungen 70 herum die Primärzone 3' der Hauptbrenner 2 wird.

## Patentansprüche

1. Brennkammer-Anordnung einer Gasturbine mit einer Vielzahl von ringförmig und wechselweise angeordneten Pilotbrennern (1) und Hauptbrenner (2), die in eine ringförmige Brennkammer (33) münden,
dadurch gekennzeichnet, daß lediglich die Pilotbrenner (1) ein kegeliges Mischrohr (36) mit einer einströmseitig angeordneten Brennstoffdüse (58) aufweisen, während die Brennstoffdüsen (66, 66') der Hauptbrenner (2) direkt in die ringförmige Brennkammer (33) münden.

2. Brennkammer-Anordnung nach Anspruch 1,
dadurch gekennzeichnet, daß jeder Hauptbrenner (2) zwei nebeneinander angeordnete Brennstoffdüsen (66, 66') aufweist.

3. Brennkammer-Anordnung nach Anspruch 1 oder 2,
dadurch gekennzeichnet, daß jede Brennstoffdüse (66, 66') des Hauptbrenners (2) einen elliptischen Brennstoffkegel erzeugt.

4. Brennkammer-Anordnung nach einem der vorangegangenen Ansprüche,
dadurch gekennzeichnet, daß die zwei Brennstoffdüsen aufweisende Brennstoff-Einspritzvorrichtung (64) des Hauptbrenners (2) eine obere Einspritzdüse (66) und eine untere Einspritzdüse (66') besitzt, die zwischen den Mischrohren (36) der Pilotbrenner (1) im wesentlichen in deren abströmseitiger Ebene liegen.

5. Brennkammer-Anordnung nach einem der vorangegangenen Ansprüche,
dadurch gekennzeichnet, daß das Mischrohr (36) Primärluft-Verwirbler (46) aufweist, während in Reihe mit den Mischrohren (36) in der Außenwand (32) und/oder der Innenwand (30) der Brennkammer (33) Luftmischdüsen (72) vorgesehen sind.

6. Brennkammer-Anordnung nach einem der vorangegangenen Ansprüche,
gekennzeichnet durch Lufteintrittsöffnungen (70) in der Außenwand (32) und/oder Innenwand (30) der ringförmigen Brennkammer (33) stromab der Brennstoffdüsen (66, 66') des Hauptbrenners (2).

7. Brennkammer-Anordnung nach einem der vorangegangenen Ansprüche,
dadurch gekennzeichnet, daß die Brennkammer (33) vom Brennerkopf (34) durch eine Stirnwand (38) abgetrennt ist, die Durchtrittsöffnungen für die Mischrohre (36) der Pilotbrenner (1) sowie für die Brennstoffdüsen (66, 66') der Hauptbrenner (2) aufweist.

8. Brennkammer-Anordnung nach einem der vorangegangenen Ansprüche,
gekennzeichnet durch einen koaxial zu jedem Mischrohr (36) angeordneten Leitkonus (50), der eine Ringkammer (56) für Kühlluft bildet.

## Claims

1. A combustion-chamber assembly of a gas turbine having a plurality of annular and alternately-arranged pilot-stage burners (1) and main-stage burners (2) discharging into an annular combustion chamber (33),
characterised in that the pilot-stage burners (1) alone comprise a flared mixing tube or pot (36) with a fuel nozzle (58) arranged at its upstream end, while the fuel nozzles (66, 66') of the main-stage burners (2) discharge directly into the annular combustion chamber (33).

2. A combustion-chamber assembly according to claim 1,
characterised in that each main-stage burner (2) comprises two fuel nozzles (66, 66') arranged side-by-side.

3. A combustion-chamber assembly according to claim 1 or 2,
characterised in that each fuel nozzle (66, 66') of the main-stage burner (2) produces an elliptical fuel cone.

4. A combustion-chamber assembly according to any one of the preceding claims,
characterised in that the two-nozzle fuel injector (64) of the main-stage burner (2) has an upper injector (66) and a lower injector (66') and is located in a plane lying downstream of and between the mixing pots or tubes (36) of the pilot-stage burners (1).

5. A combustion-chamber assembly according to any one of the preceding claims,
characterised in that the flared pot or tube (36) comprises primary air-swirling means (46), while air-mixing chutes or orifices (72) are located in the outer wall (32) and/or the inner wall (30) of the combustion chamber (33) in line with the flared pots (36).

6. A combustion-chamber assembly according to any one of the preceding claims,
characterised in that air-mixing holes (70) are located in the outer wall (32) and/or the inner wall (30) of the annular combustion chamber (33) downstream of the nozzles (66, 66') of the main-stage burner (2).

7. A combustion-chamber assembly according to any one of the preceding claims,
characterised by a dividing panel or wall (38) which separates the combustion chamber (33) from a combustion head (34) and which has apertures for the flared tubes or pots (36) of the pilot-stage burners (1) as well as for the fuel nozzles (66, 66') of the main-stage burners (2).

8. A combustion-chamber assembly according to any one of the preceding claims,
characterised by a flared member (50) positioned coaxially to each tube or pot (36) and forming an annular chamber (56) for cooling air.

## Revendications

1. Ensemble chambre de combustion d'une turbine à gaz avec une multiplicité de brûleurs pilotes (1) et de brûleurs principaux (2), disposés selon une forme annulaire et de façon alternée, qui débouchent dans une chambre de combustion (33) de forme annulaire, ensemble chambre de combustion caractérisé en ce qu'uniquement les brûleurs pilotes (1) présentent un tube de mélange conique (36) avec un injecteur de carburant (58) disposé du côté de l'admission tandis que les injecteurs de carburant (66, 66') des brûleurs principaux (2) débouchent directement dans les chambres de combustion de forme annulaire (33).

2. Ensemble chambre de combustion selon la revendication 1, caractérisé en ce que chaque brûleur principal (2) présente deux injecteurs de carburant (66, 66') disposés à côté l'un de l'autre.

3. Ensemble chambre de combustion selon la revendication 1 ou 2, caractérisé en ce que chaque injecteur de carburant (66, 66') du brûleur principal (2) produit un cône de carburant elliptique.

4. Ensemble chambre de combustion selon l'une des revendications précédentes, caractérisé en ce que le dispositif d'injection de carburant (64) du brûleur principal (2) qui présente deux injecteurs de carburant, possède un injecteur supérieur (66) et un injecteur inférieur (66'), qui se trouvent entre les tubes de mélange (36) des brûleurs pilotes (1) sensiblement dans leur plan du côté aval.

5. Ensemble chambre de combustion selon l'une des revendications précédentes, caractérisé en ce que le tube de mélange (36) présente un dispositif (46) qui sert à faire tourbillonner l'air primaire, tandis que des buses de mélange d'air (72) sont prévues en série avec les tubes de mélange (36) dans la paroi externe (32) et/ou dans la paroi interne (30) des chambres de combustion (33).

6. Ensemble chambre de combustion selon l'une des revendications précédentes, caractérisé par des ouvertures d'entrée d'air (70) dans la paroi externe (32) et/ou la paroi interne (30) des chambres de combustion (33) de forme annulaire en aval des injecteurs de carburant (66, 66') du brûleur principal (2).

7. Ensemble chambre de combustion selon l'une des revendications précédentes, caractérisé en ce que la chambre de combustion (33) est séparée de la tête du brûleur (34) par une paroi frontale (38) qui présente des ouvertures de passage pour les tubes de mélange (36) des brûleurs pilotes (1) ainsi que pour les injecteurs de carburant (66, 66') des brûleurs principaux (2).

8. Ensemble chambre de combustion selon l'une des revendications précédentes, caractérisé par un cône directeur (50) disposé de façon coaxiale à chaque tube de mélange (36), cône qui forme une chambre annulaire (56) pour l'air frais.
